# EUROPÄISCHE PATENTSCHRIFT

(11) **EP 3 930 625 B1**
(45) Veröffentlichungstag und Bekanntmachung des Hinweises auf die Patenterteilung: **07.01.2026**
(21) Anmeldenummer: 20712442.1
(22) Anmeldetag: 28.02.2020
(51) Int. Cl.: A61C 13/20, A61C 13/00, A61C 5/77, A61C 13/01, A61C 13/12, A61C 13/10, A61C 13/36, B29C 33/00

(54) **VERFAHREN ZUM HERSTELLEN EINES FORMKÖRPERS UND GESCHICHTETER FORMKÖRPER**
METHOD OF PRODUCING A MOULDED BODY AND LAYERED MOULDED BODY
PROCÉDÉ DE FABRICATION D'UN CORPS MOULÉ ET CORPS MOULÉ MULTICOUCHES

(30) Priorität: 01.03.2019 EP 19160402
(43) Veröffentlichungstag der Anmeldung: 05.01.2022
(73) Patentinhaber: Herting, Torsten, 3818 Grindelwald (CH)
(72) Erfinder: Herting, Torsten, 3818 Grindelwald (CH)
(74) Vertreter: AMMANN PATENTANWÄLTE AG
(86) Internationale Anmeldenummer: PCT/EP2020/055343
(87) Internationale Veröffentlichungsnummer: WO 2020/178195

(56) Entgegenhaltungen:
- EP-A1- 2 915 503
- EP-A1- 3 443 932
- DE-U1- 202018 104 325
- US-A1- 2018 042 705

## Beschreibung

Die vorliegende Erfindung bezieht sich auf ein Verfahren zum Herstellen eines **Rohkörpers,** bevorzugt eine Zahnprothese, gemäss Oberbegriff des Anspruchs 1. Des Weiteren bezieht sie sich auf einen nach diesem Verfahren hergestellten **Rohkörper,** bevorzugt eine Zahnprothese, und einen im Verfahren erzeugten geschichteten

### Rohkörper.

Das bevorzugte Einsatzgebiet und der Ausgangspunkt vorliegender Erfindung ist die Herstellung und nachträgliche Veränderung von Zahnprothesen. Die Erfindung ist jedoch anwendbar auf die Herstellung ganz generell von Werkstücken und insbesondere deren nachträgliche Bearbeitung, wie z. B. Motorenteile, Auto-, Flugzeug-, Schiffs-, Maschinen-, Modellbau- und andere Teile, Werkzeuge usw.

Zahnprothesen, insbesondere Teilprothesen, bestehen aus verschiedenen, unterschiedlichen Materialien, wie zum Beispiel aus Kunststoffen mit unterschiedlichen Farben und Eigenschaften, und häufig einem Metallgerüst. Das Metallgerüst besteht aus Metall oder einer Metalllegierung, zum Beispiel Chrom-Kobalt-Legierung, Titan, Edelstahl oder Goldlegierung. Als Teil des Metallgerüsts oder eingebettet in die Zahnprothese sind verschiedene Halte- und Stützelemente vorhanden wie Klammern, Geschiebe, Implantat-Abutments. Diese können aus wieder anderen Materialien bestehen. Die Prothesen selbst, wie auch die Einzelteile müssen auf wenige Mikrometer genau hergestellt, bearbeitet, zusammengefügt und meistens noch nachbearbeitet werden. Im Zuge einer Neuanfertigung muss eine Zahnprothese anprobiert, gegebenenfalls probegetragen und entsprechend den Rückmeldungen des Patienten korrigiert werden.

Für Änderungen von Zahnprothesen kommen subtraktive (Schleifen, Fräsen) und additive (3D-Druck, insbesondere Metall-Laserschmelzverfahren) Bearbeitungsverfahren zum Einsatz. Bei jedem dieser Verfahren muss die Prothese (oder allgemein ein Werkstück) exakt in einer definierten Position in den Werkstückhalter der jeweiligen Werkzeugmaschine eingesetzt werden. Eine derartige Positionierung in der erforderlichen Genauigkeit (üblicherweise in der Grössenordnung von 0,1 mm oder besser) ist jedoch sehr aufwändig und zeitraubend.

Enthält eine Zahnprothese ein Metallgerüst, so wird konventionell das vorgefertigte Metallgerüst am Modell des Ober- oder Unterkiefers befestigt. Dabei müssen die Teile des Metallgerüsts, die in die Prothese eingebettet werden, sicher in einem Mindestabstand von der Oberfläche des Modells gehalten werden, damit das Metallgerüst in der fertigen Prothese sicher vom biokompatiblen Körper der Prothese umhüllt wird, also das Metall in diesem Bereich nicht mit dem Zahnfleisch in Berührung kommt und auch sicher mit der umgebenden Prothesenteil verbunden ist, um den beim Kauen auftretenden Kräften standzuhalten. Ein Grund hierfür ist auch, dass Metallteile, die direkt mit dem Zahnfleisch in Berührung kommen beziehungsweise freiliegen, aufwendig auf Hochglanz poliert werden müssen. Die Hochglanz-Politur steht jedoch einer hochwertigen Verbindung zwischen Metall und umgebendem Prothesenmaterial entgegen.

Dieser Abstand, die sogenannte Freilegung, zwischen Metallteil und Oberfläche des Zahnfleischs wird konventionell dadurch erzielt, dass in diesem Bereich zunächst auf das Modell eine entsprechend dicke Schicht eines leicht wieder entfernbaren Materials aufgebracht wird, üblicherweise ein Wachs. Mit dieser temporären Form wird aus feuerfestem Formwerkstoff ein Duplikat hergestellt, das auf übliche Art zur Giessform für das Metallgestell weitergebildet wird. Das Wachs wird vom Modell entfernt und das Metallgestell angebracht. Das Metallgestell schwebt dann an den vorher mit Wachs belegten Partien über der Oberfläche des Modells. Die Form wird wieder geschlossen und Prothesenmaterial eingefüllt, das dann das Metallgestell in den Abschnitten, an denen eine Freilegung vorgenommen wurde, vollständig umgibt.

Nachteilig ist, dass das plastische Prothesenmaterial, das bei derart hergestellten Prothesen in Kontakt mit der Haut kommt, keine optimale Zusammensetzung aufweist und daher in der Regel weniger gut verträglich ist als vorgefertigtes Material.

Ein anderer Aspekt der Herstellung von Zahnprothesen rührt vom ästhetischen Anspruch her, ein möglichst naturgetreues, nicht künstliches Aussehen der Zahnprothese zu erhalten. Zum Beispiel wirken Zahnprothesen, die aus einem monolithischen Rohling gefräst werden, offensichtlich künstlich. Ein Grund liegt darin, dass sich Zähne und Zahnfleisch aus verschiedenen Schichten zusammensetzen, die je nach Dicke einen geringen, aber deutlichen optischen Eindruck erzeugen. In der Nachbildung kann eine nahe kommende Wirkung erzeugt werden, indem Prothese wie auch Zähne aus Schichten zusammengesetzt sind, die jeweils einen unterschiedlichen optischen Eindruck aufweisen. Zusätzlich müssen diese Schichten auch eine unregelmässige Oberfläche aufweisen. Erfahrungsgemäss führen Schichten mit ebenen oder planen Oberflächen ebenfalls zu einem künstlichen Aussehen.

Ein geschichteter Formrohling oder Rohkörper zur Herstellung von Zahnprothesen ist aus der WO-A-2018/009518 bekannt. Die Trennflächen zwischen den Platten sind allerdings eben oder nur global an schematisch vorgegebenen Stellen mit Erhebungen versehen. Nachteilig ist an dieser Lösung, dass die von der Vermessung an einer Patientin vorgegebene Form, die - z. B. aus ästhetischen Gründen - innere Schichtung und der Verlauf von Grenzen zwischen den Schichten an den vorgegebenen Aufbau der Formrohlinge angepasst werden muss. Auch das Einbetten eines Metallgestells, das einerseits zum Verbinden von separaten Prothesenteilen (z.B. linke und rechte Backenzähne bei noch vorhandenen Schneidezähnen) dient und anderseits wegen der Stabilität der Prothese selbst nötig ist, ist nicht angeben.

DE-U-20 2018 104 325 beschreibt das Herausfräsen einer Kunstzahnanordnung aus einem geschichteten Rohling, Anspritzen von Zahnfleischersatz und nachfolgendes Entfernen von überflüssigem Material.

Eine Aufgabe der vorliegenden Erfindung besteht darin, ein Verfahren zur einfacheren Herstellung eines Rohkörpers mit mindestens einer inneren Trennfläche in gegenüber der Oberfläche vorgegebener Anordnung anzugeben.

Eine andere Aufgabe kann darin gesehen werden, während der Herstellung eines Rohkörpers das genaue Positionieren einzelner Komponenten sowohl einzeln als auch im Verbund in einer Werkzeugmaschine so zu gestalten, dass eine Behandlung mit grösserem maschinellem und geringerem manuellem Anteil möglich ist.

Ein entsprechendes Verfahren ist im Anspruch 1 angegeben. Die weiteren Ansprüche geben bevorzugte Ausführungsformen des Verfahrens, einen geschichteten Rohling und eine mit dem Verfahren hergestellte Zahnprothese an.

Im Allgemeinen werden gegenüber dem konventionellen Herstellungsverfahren einige Verfahrensabläufe in geänderter Reihenfolge ausgeführt und manche Materialien mehrfach verwendet. Zum Beispiel dient das Kunststoffmodell, auf dem das Metallgussgerüst aufgepasst wird, also aufgelegt und genau an die Oberflächenform angepasst wird, gleichzeitig teilweise als Prothesenbasis oder -körper und als Haltevorrichtung für die positionsgenaue Verbindung mit den weiteren Komponenten und bei der endgültigen Oberflächenbearbeitung und gegebenenfalls Oberflächenveredelung. Der konventionell aus einem separaten Material gefertigte Negativ-Konter, wie er bevorzugt bei der Herstellung von Zahnprothesen erstellt wird, besteht aus dem Material, aus dem auch die äusserste Schicht der Prothesenzähne hergestellt wird. Durch eine entsprechende Fräsung kann bevorzugt auch die äusserste Schicht des Zahnschmelzes der Prothesenzähne herausgearbeitet werden.

Eine bevorzugte Ausführungsform ist wie folgt:
Die einzelnen Komponenten weisen einen Positionierungsabschnitt auf, der bevorzugt ausserhalb des Bereichs liegt, der vom Werkstück abgedeckt wird. In diesem Positionierungsabschnitt sind eine oder mehrere Schlüsselstrukturen angeordnet. Die Schlüsselstrukturen sind derart ausgebildet, dass sie es gestatten, die einzelnen Komponenten auf einer Basis, in der Regel einem Rohling, genau in einer vorgegebenen Position anzubringen. Die Gegenstücke zu den Schlüsselstrukturen an den einzelnen Komponenten, die Rohlingschlüsselstrukturen, werden von der jeweiligen Werkzeugmaschine hergestellt. Ihre Position ist also im Koordinatensystem der Werkzeugmaschine bekannt. Somit ist auch die Position der Schlüsselstrukturen an den einzelnen Komponenten bezüglich des Abdrucks der Referenz des Werkstücks, insbesondere einer Zahnprothese, bekannt. Insgesamt ist es damit möglich, die Position eines Werkstücks (einer Zahnprothese), das am Rohling oder auch am Abdruck der einzelnen Komponenten angebracht ist, sowie die genaue Positionierung der einzelnen Komponenten über die Schlüsselstrukturen am Rohling genau bezüglich des Koordinatensystems der Werkzeugmaschine festzulegen. Durch das Fräsen des Duplikates zeigt die Maschine, in welcher Position sie das Werkstück bearbeitet. Durch Verwendung der einzelnen Komponenten wird dann das Werkstück in exakt dieser Position fixiert.

Mithilfe der Schlüsselstrukturen (oder Referenzmarkierungen) oder allgemein Referenziermittel werden die einzelnen Komponenten positionsgenau zueinander ausgerichtet. Beispielhaft für solche Referenzmarkierungen sind diejenigen aus der früheren Patentanmeldung Nr. EP18195720.0 des Anmelders.

Die Erfindung wird weiter an einem bevorzugten Ausführungsbeispiel unter Bezugnahme auf Figuren erläutert. Es zeigen:
- Fig. 1: Draufsicht auf einen Rohling mit aufgesetztem Konter entsprechend einem Formunterteil und einem Formoberteil;
- Fig. 2: Schnitt gemäss II - II in Fig. 1;
- Fig. 3: Draufsicht auf einen Rohling gemäss Fig. 1;
- Fig. 4: Unteransicht auf einen Konter gemäss Fig. 1;
- Fig. 5: Schnitt wie Fig. 4 nach Ausformen und mechanischer Bearbeitung;
- Fig. 6: Schnitt gemäss VI - VI durch einen Konter mit vorgefertigten Zähnen;
- Fig. 7: 3D-Teilansicht auf einen Rohling mit Metallgerüst und Manipulierimplantat;
- Fig. 8: Schnitt analog II-II einer zweiten Ausführungsform;
- Fig. 9: schematisierte Schnittdarstellung eines Rohkörpers analog VI-VI mit für die Bearbeitung unzugänglichem Abschnitt und zusätzlicher Schlüsselstruktur;
- Fig. 10: Schnitt durch gedrehte Aufspannung eines Rohkörpers zur Bearbeitung schwer zugänglicher Abschnitte;
- Fig. 11: vergrösserter Ausschnitt aus Fig. 8 mit naturnäherer Schichtung.

Die frühere Anmeldung EP18195720.0 des Anmelders gibt ein Verfahren an, um an einem Rohling Teile in genau vorgegebener Lage relativ zum Rohling reproduzierbar anbringen zu können und gegebenenfalls auch nach Entfernen neu anbringen zu können. Der Rohling zeichnet sich dadurch aus, dass er insgesamt ausgebildet ist, an einer Werkzeugmaschine (additive oder subtraktive Fertigung) angebracht zu werden. Damit dies in einer reproduzierbaren Position erfolgt, weist der Rohling Referenzmarkierungen auf. Dabei handelt es sich um Oberflächenstrukturen wie Erhebungen oder Vertiefungen, gegebenenfalls auch nur grafische Markierungen. Die Werkzeugmaschine weist entsprechende mechanische Vorkehrungen oder optische Detektoren für die korrekte Anordnung relativ zum Koordinatensystem der Werkzeugmaschine auf. Denkbar sind je nach Entwicklung der Technik auch andere Massnahmen, um diese reproduzierbare und bekannte Anordnung des Rohlings relativ zum Koordinatensystem der Werkzeugmaschine sicherzustellen. Bereits am Rohling können danach vollautomatisch in reproduzierbarer Position Bearbeitungsschritte vorgenommen werden, da die Lage der Bearbeitungsschritte auf dem Rohling in den Koordinaten der Werkzeugmaschine vorhergesagt werden kann. Durch Schlüsselstrukturen, die sicherstellen, dass am Rohling weitere Teile in bekannter, relativer Anordnung zum Rohling angebracht werden können, überträgt sich diese automatisierte Bearbeitungsfähigkeit auch auf diese zusätzlichen Teile. Die Schlüsselstrukturen können dabei Erhebungen und komplementär dazu ausgebildete Vertiefungen sein. Denkbar sind diese in verschiedenen Ausführungen, wie zylindrische oder polygonale Strukturen. Für eine erhöhte Präzision sind mindestens zwei oder besser drei derartige Strukturen in möglichst grossem Abstand voneinander vorteilhaft. Drei Strukturen sind insbesondere vorteilhaft, wenn eine genaue Anordnung im Raum, also bezüglich dreier Koordinaten, nötig ist, was auch oft der Fall ist.

Eine mögliche Anordnung besteht in einer Gruppe von drei, vier, fünf oder sechs Noppen, die ähnlich einem Steckbaustein in entsprechende Vertiefungen des anderen Teils eingesteckt werden können. Vorteilhaft an diesen Schlüsselstrukturen ist, dass die Teile ohne weiteren Aufwand in exakt vorgegebener relativer Anordnung aneinander angesetzt werden können. Die erreichbare Präzision genügt dabei auch den Anforderungen der Dentaltechnik.

Ein weiterer Vorteil besteht darin, dass die Teile separat herstellbar sind und es möglich ist, sie erst dann miteinander zu verbinden, wenn Bearbeitungsschritte nötig sind, die eine Berechenbarkeit der Bearbeitungsschritte in Maschinenkoordinaten der jeweiligen Werkzeugmaschine für eine automatisierte Durchführung erfordern.

Spezifisch in der vorliegenden Erfindung werden die einzelnen Komponenten mit Hilfe der Schlüsselstrukturen positionsgenau miteinander verbunden. Dazwischen entstehende Formhohlräume werden durch Prothesenmaterial oder Zahnmaterial aufgefüllt. Nach dem Aushärten dienen sowohl diese geformten Materialien als auch die Komponenten selbst als Elemente oder Bestandteile der Prothese. Durch das Verbinden der Bestandteile entsteht als Rohkörper oder Formrohling sozusagen eine "alternierende Sandwichstruktur", in der individuell gefräste Teile oder Schichten mit anderen Schichten verbunden sind. Dabei wechseln sich Schichten, die aus den festen Komponenten gefräst wurden, mit Schichten aus vergossenem und gegebenenfalls auch gefrästem Material ab. Anstelle oder zusätzlich von Fräsen können andere Bearbeitungsschritte der additiven oder subtraktiven Fertigung eingesetzt werden.

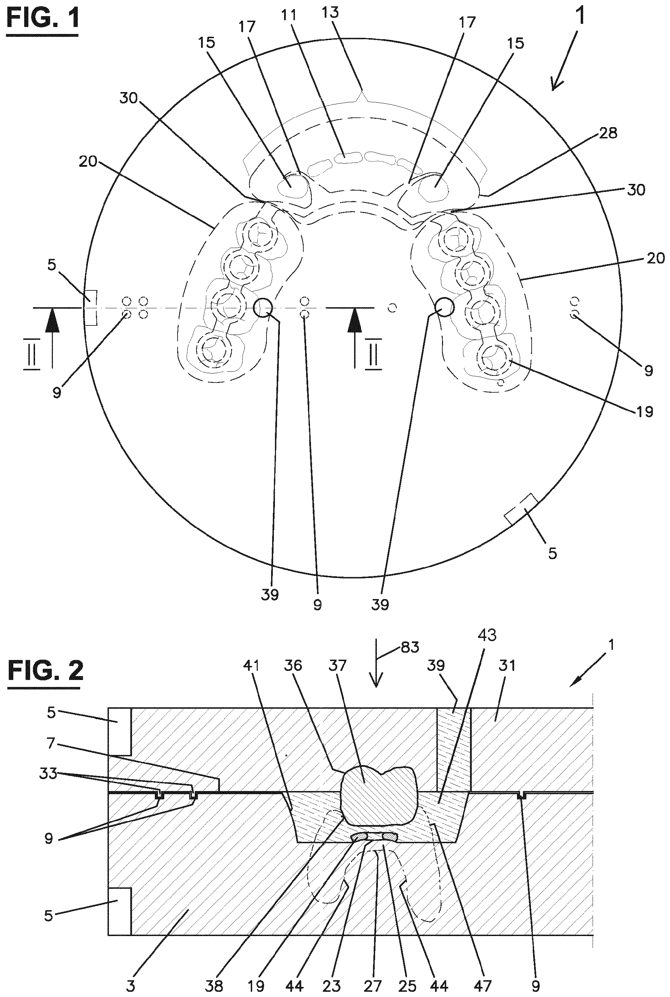

Figuren 1 bis 4 zeigen einen solchen Sandwich 1, hier im Wesentlichen einen aus mehreren Lagen bestehenden Rohkörper 1 mit Hohlräumen, die mit einem fliessfähigen, aushärtbaren Material gefüllt sind. Der Rohkörper 1 (oder Sandwich 1) stellt somit eine Vorstufe eines **Formkörpers mit** einem fliessfähigen Material dar.

Im Rohling 3, der in Fig. 1 als Unterteil des **Rohkörpers** 1 dargestellt ist und als Basis oder Träger fungiert, sind zum einen aussen Referenzmarkierungen 5 in Form von Vertiefungen eingearbeitet, um den Rohling 3 in einer Werkzeugmaschine reproduzierbar anordnen zu können. An der Oberfläche 7 sind Schlüsselstrukturen 9 vorhanden. Sie dienen dazu, ein weiteres Teil des **Rohkörpers** 1, insbesondere einen sogenannten Konter 31 **als oberste oder erste Formplatte,** positionsgenau auf dem Rohling 3 anzuordnen. In der Oberfläche 7 des Rohlings 3 ist für die beispielhafte Herstellung einer Zahnprothese im Wesentlichen ein Abbild des Kiefers ausgearbeitet, in den die Prothese eingesetzt werden soll. Das Modell ist unterteilt in einen naturbelassenen Abschnitt 13, in dem insbesondere noch Zähne 15 vorhanden sind, an denen die Prothese durch Verankerungselemente 17 des Metallgestells 19 befestigt wird (siehe Figuren 1, 3 und 7), und Bereiche 20, die von der Prothese abgedeckt beziehungsweise deren Zähne von der Prothese nachgebildet werden sollen und die als Ausnehmungen ausgebildet sind, die ein Volumen aufweisen, das dasjenige der späteren Prothesenteile 21 übersteigt. Einzig die zentrale Bodenfläche 23 (Figur 2) ist bereits als Auflagefläche für das Metallgestell 19 ausgebildet. Durch die an das Metallgestell 19 genau angepasste Auflagefläche ist das Metallgestell 19 exakt auf dem Rohling 3 positioniert und damit auch in der Werkzeugmaschine. Diese zentrale Bodenfläche 23 verläuft um die Freilegung 25 oberhalb der virtuellen Zahnfleischoberfläche 27, deren Verlauf durch Vermessen des Kiefers des Patienten ermittelt wurde.

Entsprechend sind auch die Nachbildungen der natürlichen Zähne 15 in einer Vertiefung 28 angeordnet, die diesen Bereich des Kiefers des Patienten in dem Mass nachbildet wie für die Fixierung des Gestells 19 nötig. Die Prothesenvertiefungen 21 und die Vertiefung 28 der natürlichen Gebissteile sind durch Wände 30 getrennt, die einen Übertritt von flüssigem Prothesenmaterial aus den Vertiefungen 21 in die Vertiefung 28 verhindern. Das Metallgestell 19 ist durch Ausnehmungen, zum Beispiel Schlitze in den Wänden 30, geführt, die danach wieder mit geeignetem Material aufgefüllt werden, um die Wände 30 wieder zu schliessen.

Auf die Wände 30 kann verzichtet werden mit der Folge, dass der Raum 28 mit fliessfähigem Prothesenmaterial gefüllt wird. Dann muss jedoch das Material um die freiliegenden Teile des Metallgestells 19 herum inklusive der Haltestrukturen 17 wieder freigelegt werden, z.B. durch Fräsen. Da das Metallgestell wie auch die gesamte Prothese als numerisches Modell vorliegt, ist das Freilegen zwar mit Zeitaufwand verbunden, aber benötigt ansonsten wenig oder keinen zusätzlichen Aufwand und kann auch so optimiert werden, dass nur so viel Material entfernt wird, wie nötig ist, um die Prothese 20 und die freiliegenden Metallgestellteile wie auch die Verankerungselemente 17 aus dem Modell herausnehmen zu können.

Auf den Rohling 3 ist der Konter 31 aufgesetzt, der zugleich das Formoberteil für das spätere Giessen von Prothesenmaterial darstellt. Seine vorbestimmte Position gegenüber dem Rohling 3 ist durch Schlüsselstrukturen 33 genau festgelegt, die komplementär zu den Schlüsselstrukturen 9 des Rohlings 3 ausgebildet sind. Im Konter 31 werden vorgefertigte Zähne 37 eingesetzt. Dazu weist der Konter 31 Mulden 36 auf, die an den durch die Modellierung der Prothese vorgegebenen Positionen angeordnet sind und in die die Zähne 37 eingesetzt und vorübergehend fixiert werden, z. B. durch einen Klebstoff, möglicherweise aber auch nur durch enge Ausführung der Mulden 36, wodurch eine Klemmwirkung erzeugt wird.

Im Unterschied zu den Schlüsselstrukturen 9 sind die Schlüsselstrukturen 33 erhaben. Solche erhabenen Schlüsselstrukturen 33 können durch grossflächiges Entfernen von Material an der Oberfläche des Konters 31 hergestellt werden. Der Konter kann zur Verringerung des Aufwands auch mit Inseln, also flächigen Bereichen, versehen werden, aus dem die Schlüsselstrukturen durch Abtragen von Material freigelegt werden. Eine dritte Möglichkeit ist eine versenkte Ausführung und das Anbringen von zweiseitig wirkenden, erhabenen Strukturen, wie Zentrierstifte oder Teilen mit zweiseitig hervorstehenden Strukturen wie Zapfen. Schliesslich sind Konter 31 und Rohling 3 auch, wenigstens teilweise, in einem additiven Verfahren herstellbar, das ohne weiteres die Ausbildung von erhabenen Strukturen an der Oberfläche gestattet.

Durch den Giesskanal 39 wird der **Formkavität** 41 mit fliessfähigem Prothesenmaterial 43 (Giessmaterial) gefüllt. Als Resultat ergibt sich **der sandwichartige Rohkörper** 1, in **dem** die vorgefertigten Zähne 37 wie auch das Metallgestell 19 dank der Schlüsselstrukturen 9, 33 relativ zueinander und zu den Nachbildungen der natürlichen Zähne 15 genau positioniert ist. Die Zähne 37 bilden dabei den unregelmässigen Abschnitt 38 der oberen Formwand der Formkavität 41.

Wenn möglich, wird der Konter 31 nach Aushärten des Prothesenmaterials 43 abgehoben. Die weitere Verarbeitung kann jedoch auch an der kompletten Sandwichstruktur 1 erfolgen. In erster Linie wird dabei durch subtraktive Verfahren soweit vorhanden das Material des Konters 31, überschüssiges vergossenes Prothesenmaterial 43 und auch Material des Rohlings 3 entfernt, um die Oberfläche 47 der Prothese auszuarbeiten, die zahnfleischähnliches Aussehen aufweist. Wegen der genau bekannten Lage der Kunstzähne 37 ist es möglich, selbst diese ohne Beschädigung freizulegen. Alle diese Bearbeitungsschritte sind computergesteuert aufgrund der vorliegenden Daten in den Koordinaten der Prothese durchführbar, da die Beziehung zu den Werkzeugmaschinenkoordinaten wegen der Referenzmarkierung 5 und der Schlüsselstrukturen 9, 33 zur Lage der Prothesenteile exakt bekannt und festgelegt ist.

Da Werkzeugmaschinen in der Regel darauf beschränkt sind, eine Bearbeitung nur von einer Seite durchzuführen, hier von der Oberseite, dem Konter 31, her, ist es nötig, den Sandwich 1 um 180° gedreht einer zweiten Bearbeitung von der Unterseite her zu unterwerfen. In dieser Aufspannung können die nur von unten bearbeitbaren Zonen wie zum Beispiel die Auflagefläche 44 auf das virtuelle Zahnfleisch 27 bearbeitet werden. Aus technischen Gründen verbleiben dabei Stege 49, die die Prothese mit dem verbliebenen Rand des Rohlings 3 verbinden, der der Aufspannung in einer Werkzeugmaschine dient. Aus ökonomischen Gründen wird insgesamt um die Prothese herum vermieden, unnötig Material abzutragen, da dies in der Regel nur den Zeitbedarf erhöht.

Zwischen den linken und rechten Prothesenteilen 21 verbleibt ein Teil des **Rohkörpers** 1 beziehungsweise des Rohlings 3, und entsprechende Stützstrukturen 50, die sich zu diesem zentralen Teil des Rohlings 3 erstrecken, halten die Prothese 21 gegenüber diesem Teil.

Oft ist es nötig, zusätzliche Befestigungsmittel in die Prothesenteile 21 einzubetten, wie zum Beispiel eine Matrize 52, die an der Patrize eines Implantats andockt, das im Kiefer der Patientin eingesetzt ist. Auch die Position dieser Matrize 52 muss daher exakt eingehalten werden. Dazu wird ein sogenanntes Manipulierimplantat 53 im Rohling 3 angebracht. Parameter (Länge, Position) der dafür nötigen Bohrung wie auch die Position der Matrize 52 kann aus Modellkoordinaten in Werkzeugmaschinenkoordinaten präzise umgerechnet werden, wobei die Länge des Manipulierimplantats 53 in Verbindung mit der Tiefe der Bohrung die vertikale Position der Patrize und damit der Matrize 52 festlegt.

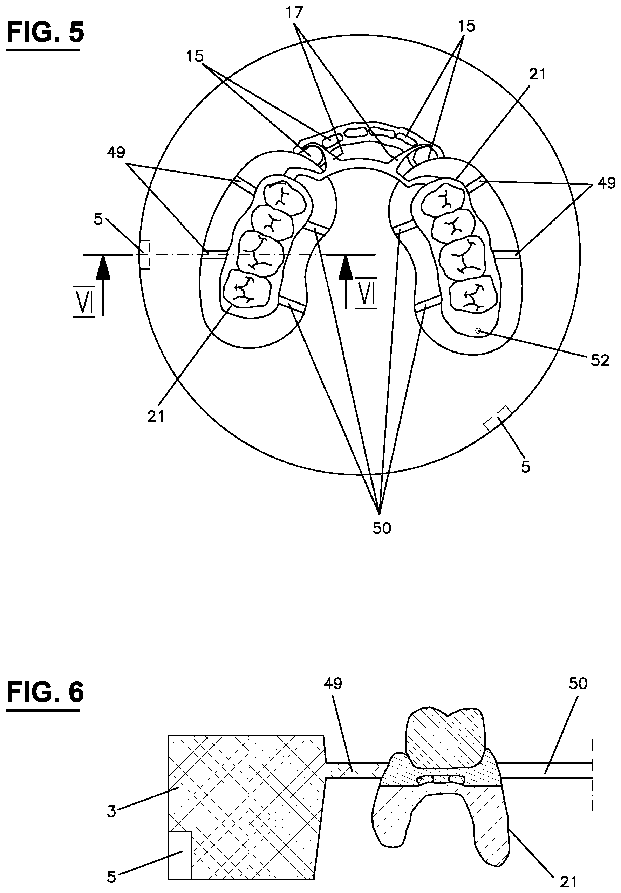

Nach dem Freilegen der Prothese (s. Figur 5) wird der Rest des Manipulierimplantats 53 manuell, zum Beispiel mit einer Zange, aus der Matrize entfernt (Die Matrize 52 ist in Figur 5 in der Prothese 21 eingebettet und daher nicht sichtbar).

### Zweites Ausführungsbeispiel:

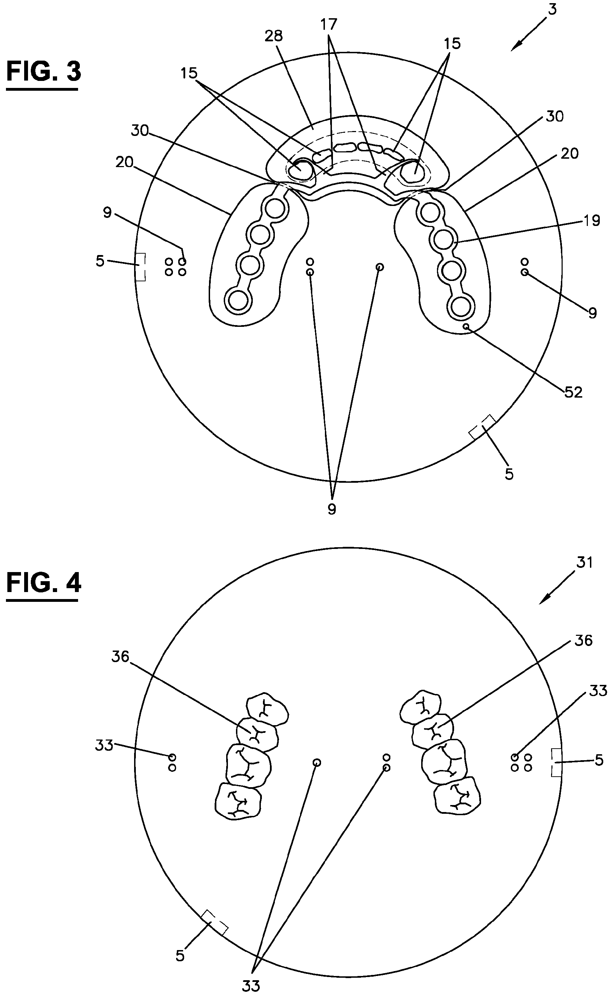

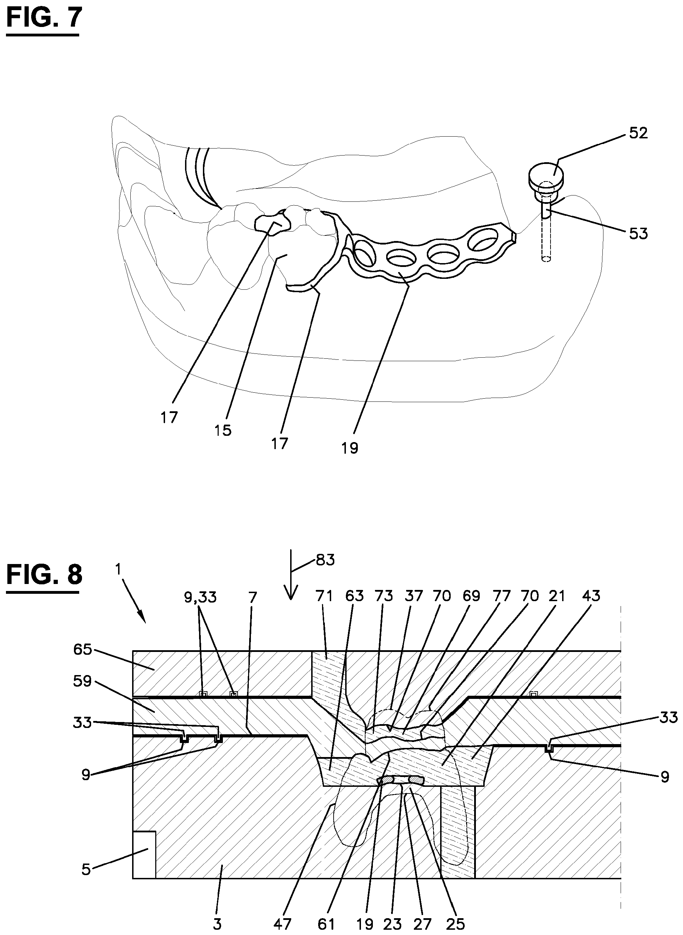

Figur 8 zeigt einen Querschnitt analog Figur 4. Hier ist der **Rohkörper** 1 jedoch mehrlagig. Auf dem Rohling 3 liegt eine erste Zwischenplatte 59, deren Unterseite analog dem Konter 31 des vorangehenden Beispiels mit Schlüsselstrukturen 33 versehen ist. Im Bereich der Prothesenabschnitte 21 ist die Unterseite 61 der Zwischenplatte 59 so geformt, dass sie eine erste Formkavität 63 nach oben begrenzt, die sich etwa bis zum Übergang zwischen Zahnfleisch und Zahn erstreckt. Mit anderen Worten wird angestrebt, aus dem Material des Rohlings 3 und dem in die erste Formkavität 63 eingefüllten rosafarbenen Prothesenmaterial 43 (rosafarben zur Nachbildung von Zahnfleisch) wie im ersten Ausführungsbeispiel das Zahnfleisch nachzubilden. Auf der Zwischenplatte 59 (z. B. geeignet für die Nachbildung des Zahnhalses, Farbe gelblich-bräunlich) liegt die Deckelplatte **(oberste oder erste Formplatte)** 65 (z.B. geeignet für die Nachbildung von Zahnschmelz; Farbe und andere optischen Eigenschaften (Transparenz) sind an die Darstellung von Zahnschmelz angepasst) auf. Deckelplatte 65 und Zwischenplatte 59 sind an den Kontaktflächen mit unteren und oberen Schlüsselstrukturen 9, 33 versehen analog zur Kontaktfläche zwischen Zwischenplatte 59 und Rohling 3. Damit ist auch die Lage der Deckelplatte 65 relativ zum Rohling 3 exakt bestimmt. Im Bereich der nachzubildenden Zähne 37 ist zwischen Zwischenplatte 59 und Deckelplatte 65 eine zweite Formkavität 69 vorhanden, in die über einen Giesskanal 71 dentinfarbenes Prothesenmaterial 73 (also sowohl wegen Farbe als auch anderer Parameter geeignet zur Nachbildung von Dentin) eingefüllt wird. Auch die Grenzflächen 70 der zweiten Kavität 69 sind naturähnlich unregelmässig geformt. Das Prothesenmaterial 73 ist in Konsistenz und Farbgebung ausgebildet, Teil eines Zahns 69 zu bilden. In diesem Ausführungsbeispiel wird die Zahnfleischnachbildung aus dem Material des Rohlings 3 und dem ersten giessbaren Prothesenmaterial 43 gebildet, die Zahnnachbildung aus dem Material der Zwischenplatte 59, der Deckelplatte 65 und dem zweiten giessbaren Prothesenmaterial 73.

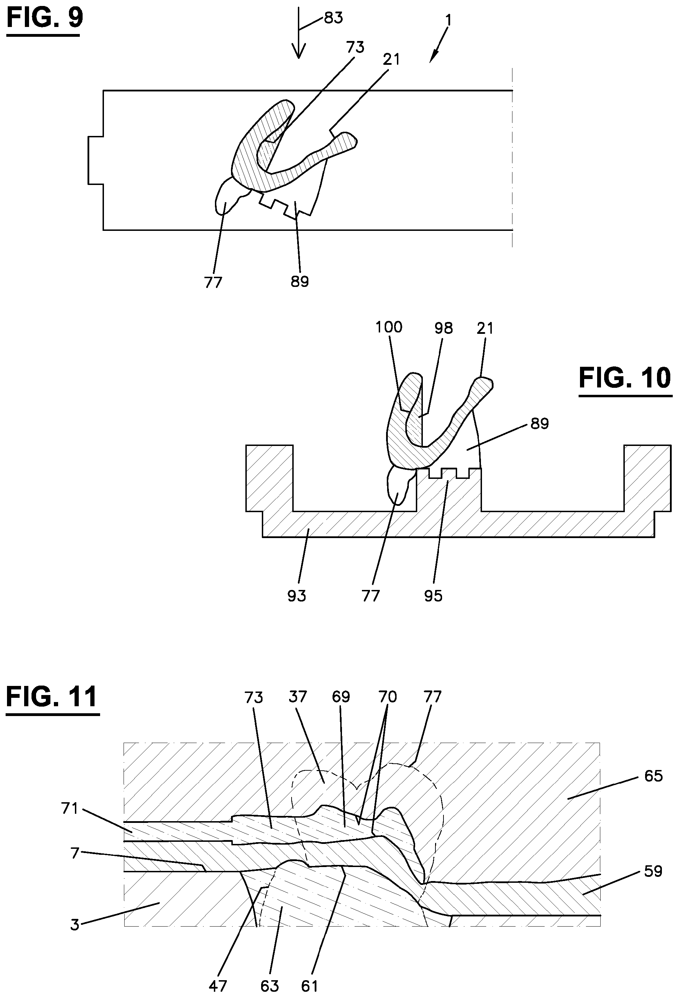

In Fig. 11 ist ein vergrösserter Ausschnitt der Fig. 8 der Zahnnachbildung 37 gezeigt, jedoch mit anderem Schichtenverlauf. Die Schichten sind besser an die natürlichen Gegebenheiten eingepasst. Die Zahnschmelznachbildung durch die Deckelplatte 65 ist in Fig. 11 rechts heruntergezogen bis zur Zwischenplatte 59, die das Material für den Zahnhals bereitstellt. Die Formkavität 69 und damit das plastische zweite Prothesenmaterial 73 enden damit vor der späteren Wand des Zahns, so dass die Dentinnachbildungsschicht aus dem Material 73 analog einem natürlichen Zahn durch die Zahnschmelzschicht abgedeckt ist und im Übrigen auch im Inneren angepasst an die Zahnoberfläche 77 ausgebildet ist.

Nach dem Aushärten der giessbaren Prothesenmaterialien 43, 73 wird ähnlich wie im ersten Ausführungsbeispiel durch subtraktive Verfahren wie Fräsen das Material des Sandwich 1 entlang der virtuellen Oberfläche 27 des Zahnfleischs beziehungsweise der Oberfläche 77 der Zahnimitate 37 entfernt.

Diese Prothese wird somit in einem integralen, hochautomatisierbaren Herstellungsverfahren inklusive der künstlichen Zähne hergestellt. Sowohl Zahnfleischimitat als auch Zahnimitat weisen dabei die geforderte geschichtete Struktur auf, um ein naturnahes Aussehen zu erzeugen. Offensichtlich ist es möglich, für höhere Anforderungen oder andere Einsatzgebiete des vorgestellten Herstellungsverfahrens mehr als eine Zwischenplatte 59 einzusetzen. Die Giesskanäle zu weiter innen liegenden Formkavitäten können radial von aussen entlang der Trennflächen zwischen den entsprechenden Platten geführt werden, oder auch von oben und von unten, in der Regel dann auch eine kurze Wegstrecke radial entlang der entsprechende Trennflächen.

### Zusammenfassende Darstellung

1. Eine **Rohling** wird aus einem **Rohmaterial,** insbesondere aus PMMA (Polymethylmethacrylat), gefräst;
2. Ein Metallgerüst wird gefräst, gegossen oder auf andere, an sich bekannte Art hergestellt und auf **den Rohling** aufgesetzt;
3. Mindestens eine Platte wird auf **den Rohling** aufgelegt, wobei sich zwischen **Rohling** und Platten beziehungsweise zwischen den Platten Hohlräume befinden, die zum Füllen mit einer plastischen Formmasse geeignet und von aussen zugänglich sind, wobei die Formmassen zugleich eine Verbindung zwischen den Platten beziehungsweise Platte und **Rohling** herstellen. Sowohl Platten als auch **Rohling** und Formmaterial sind so gewählt, dass sie Teil des herzustellenden Produkts, insbesondere einer Zahnprothese, bilden können;
4. Die Prothesenzahnbasis wird aus dem zahnfarbenen PMMA gefräst, und zwar an der Ober- und Unterseite, als unterer beziehungsweise innerer Teil des der Prothesenzähne;
5. Sofern keine vorgefertigten Prothesenzähne eingesetzt werden, wird der Dentinkern bevorzugt aus einem plastischen Formmaterial gebildet;
6. Der Bereich des Zahnschmelzes der Prothesenzähne wird aus der obersten oder allenfalls einigen oberen Platten und dazwischen befindlichen, ausgehärtetem plastischem Formmaterial gefräst. Die Platten, die an der Bildung der Zähne beteiligt sind, werden dabei vor dem Zusammenfügen bereits im Bereich der Formhohlräume so an der Oberfläche bearbeitet, insbesondere durch Fräsen, dass ein naturnaher, geschichteter Aufbau weitgehend frei von planen Ebenen und Flächen resultiert.

Das gesamte Verfahren zur Herstellung einer Teil- oder Vollprothese kann wie folgt zusammengefasst werden:
1. Ein Modell der Kiefersituation bestehend aus Schleimhautoberfläche, Zähnen, prothetischen Konstruktionen (Kronen, Brücken, Geschieben, Implantat-Interfaceoberflächen usw.) wird in einer zur Aufnahme in ein Bearbeitungsgerät geeigneten Form und aus einem Material hergestellt, das später als Teil der fertigen Prothese dient, zum Beispiel als Prothesenbasis und Prothesenkörper, wobei:
   1.1. Hohllegungen bereits unter den Metallstrukturen auf das Modell konstruiert werden;
   1.2. Das Modell **(Rohling)**
      1.2.1. aus einem vorgefertigten Rohling besteht;
      1.2.2. in einem 3D-Druckverfahren, möglicherweise mit nachfolgender subtraktiver und/oder additiver Veredelung hergestellt wird; oder
      1.2.3. durch Auffüllen einer Negativform hergestellt wird, die durch Fräsen, 3D-Druck oder ein anderes, an sich bekanntes Verfahren hergestellt wurde;
2. Das Metallgerüst wird durch Modellguss, Fräsen, 3D-Druck oder andere an sich bekannte Verfahren hergestellt und auf dem Modell der Kiefersituation manuell oder maschinell angepasst, platziert und gegebenenfalls fixiert, wobei vorgesehen ist, im Zuge des abschliessenden Fräsens der gesamten Prothese auch die freiliegenden Gerüstbereiche wie Gaumenplatte oder Sublingualbügel maschinell nachzubearbeiten;
3. Sonstige Halte-und/oder Stützstrukturen (Geschiebe, Implantat-Abutments oder ähnliches) werden manuell oder maschinell in oder an diesem Modell platziert;
4. Ausserhalb, möglicherweise aber auch innerhalb, des Bereichs der späteren Prothese werden Schlüsselstrukturen platziert, mithilfe derer die verschiedenen Blanks (aus festem Material bestehende Teile) zur Herstellung weiterer Prothesen- oder Hilfselemente positionsgenau zueinander platziert werden können;
5. Ein oder mehrere Rohlinge werden hergestellt, die Abschnitte zum Ausbilden von Zwischenschichten aufweisen, die zum Beispiel Zahnkerne, und zusätzliche Prothesen-Konstruktionselemente aufnehmen. Diese Rohlinge enthalten Gegenschlüssel auf der Unterseite und/oder Oberseite zum Aufstecken weiterer derartiger Teile. Die Rohlinge bestehen im einfachsten Fall selbst aus Material, das nach dem folgenden Fräsen zum Teil der Prothese (Zahnfleisch, Zahnbestandteil, z.B. Zahnschmelz oder Zahn) wird. Die Rohlinge können zum Beispiel noch folgende Eigenschaften und Merkmale aufweisen:
   5.1. Sie können Negativstrukturen an ihrer Unterseite aufweisen, in die positionsgenau vorgefertigte, gegebenenfalls konfektionierte Prothesenzähne fixiert eingesetzt werden können. Diese Rohlinge können zum Beispiel bestehen aus:
      5.1.1. thermoplastischem (wiederverwendbarem) Material;
      5.1.2. nicht wiederverwendbarem, alloplastischem Material; oder
      5.1.3. magnetorheologischem wiederverwendbarem Material, insbesondere zusammen mit einer für dieses Verfahren notwendigen Vorrichtung zum Erweichen und/oder Erhärten, wie zum Beispiel eine Vorrichtung, die Magnete aufweist.
   5.2. Sie enthalten direkt in einem 3D-Druck oder einem ähnlichen an sich bekannten Verfahren aus einer oder mehreren Schichten hergestellte Prothesenzahnrohlinge oder -zähne, die bevorzugt in einem Fräsverfahren veredelt sind;
   5.3. Sie enthalten lediglich die inneren Prothesenzahnkerne aus einem zahnfarbenen Prothesenzahnkunststoff, wobei Ober- und Unterseite entsprechend der Schichtungsgeometrie der Prothesenzähne und angepasst an die darunterliegende Prothesenschicht geformt sind.
6. Die vorgenannten Formteile werden als Schichten ungerader Nummern beginnend mit Schicht Nummer 3 auf das Modell, das die Schicht 1 bildet, **also den Rohling,** aufgelegt, wobei die Schlüsselstrukturen für eine exakte, vorgegebene Positionierung relativ zueinander benutzt werden und die oberste (Zahnschmelz-)Schicht, die das letzte aufgesetzte Formteil bildet, zunächst nur an der Unterseite bearbeitet wird.
7. Die zwischen dem **Rohling** und den anderen Formteilen bestehenden Hohlräume, die die geraden Schichten beginnend mit Nummer 2 bilden, werden mit plastischem Prothesenmaterial in der jeweiligen Farbe (rosa oder zahnfarben entsprechend der jeweiligen Schichten) in einem der folgenden Verfahren gefüllt, um die einzelnen Prothesenschichten chemisch und/oder mechanisch/physikalisch zu verbinden:
   7.1. Injektionsverfahren mit Zufuhr des Materials über Kanäle, die in den Formteilen angeordnet sind;
   7.2. Stopfverfahren.
8. Aus dem Sandwich, der aus der Verbindung von **Rohling** (Modell), Formteilen und deren dazwischen liegenden, ausgehärteten Schichten von plastischem Prothesenmaterial gebildet ist, wird abschliessend die komplette Prothese mit allen Elementen sozusagen aus dem Vollen herausgefräst.
9. Eine Nachbearbeitung ist maschinell möglich, wenn die Prothese in einem Werkstückhalter fixiert und durch Scannen und Vergleich mit den numerischen Modelldaten, aufgrund derer die Prothese im Schritt 8 aus der Sandwichstruktur gefräst wurde, im Werkstückhalter referenziert und damit eine Beziehung zu den Werkzeugmaschinenkoordinaten hergestellt wurde.

Die Formteile haben damit in der Regel zwei Funktionen. Zum einen stellen sie Wände der Formkavität dar und dienen zum Positionieren und Aufspannen in einer Werkzeugmaschine. Zum anderen bilden sie Teil des Produkts. Allenfalls im Fall, dass vorgefertigte Bestandteile, wie Zähne 37, in ein Formteil eingesetzt werden, wird dieses in der Regel im Wesentlichen vollständig entfernt. Denkbar ist aber auch im letztgenannten Fall, dass das Formteil auch Teil des Produkts bildet.

### Stark hinterschnittene Bereiche

Teile einer Prothese, insbesondere der konkave Teil der Zahnfleischnachbildung, der auf dem Kiefer aufliegt, kann Bereiche 79 aufweisen, die in einem derartigen Winkel zur normalen Bearbeitungsrichtung 83 liegen oder auch Hinterschnittcharakter aufweisen, dass sie in einer normalen Aufspannung von üblichen Werkzeugmaschinen nicht bearbeitet werden können. Als normale Bearbeitungsrichtung kann mit Bezug auf Figur 4 von oben gemäss Pfeil 83 und die Gegenrichtung angesehen werden.

Dieses Problem kann dadurch gelöst werden, dass an geeigneter Stelle einer der Prothesenteile 21 eine Hilfsschlüsselstruktur 89 ausgebildet wird, wie in Figur 10 gezeigt. In dieser Figur sind die übrigen Komponenten des **Rohkörpers** 1 nicht im Detail ausgeführt, es ist jedoch eine Konstruktion wie in den vorangehenden Ausführungsbeispielen vorgesehen.

Nach Herstellung insbesondere gemäss vorangehenden Ausführungsbeispielen, wobei Prothesenmaterial 98 nicht entfernt werden konnte, wird die Prothese mittels der Hilfsschlüsselstruktur **89** in einem entsprechenden Werkstückträger 93 angeordnet, der eine entsprechende komplementäre Schlüsselstruktur 95 aufweist. Da der Ort der Schlüsselstruktur 95 aus den Konstruktionsdaten relativ zur Prothese exakt bekannt ist ebenso wie diejenige der komplementären Schlüsselstruktur 95 im Werkstückträger 93, kann numerisch eine Transformation in Werkzeugmaschinendaten für die Entfernung des überflüssigen Prothesenmaterials 98 vorgenommen werden, so dass dies automatisiert erfolgen kann. Durch die neue Anordnung der Prothese 21 im Werkstückträger 93 ist die virtuelle Oberfläche 100, die noch durch eine Bearbeitung wie Fräsen durch Entfernen des überschüssigen Materials 98 herausgebildet werden muss, in eine genügend in Arbeitsrichtung 83 der Werkzeugmaschinen geeignete Richtung geschwenkt worden, so dass sie nun den Werkzeugen leicht zugänglich ist. Nach dem Bearbeitungsschritt wird auf geeignete Art, wie zum Beispiel Abbrechen oder Abschneiden, die Hilfsschlüsselstruktur 98 entfernt.

Aus der vorangehenden Beispielbeschreibung geht hervor, dass in einem Verfahren zum Herstellen eines **Rohkörpers** Formteile, insbesondere ein Rohling und darauf eine oder mehrere Formplatten, aufeinander gelegt werden. Aneinander anliegende Flächen sind dabei jeweils mit passenden, insbesondere zueinander komplementären, Referenziermitteln, wie z.B. Vertiefungen und Erhebungen, ausgestattet, so dass die Formplatten relativ zueinander und zum Rohling in genau einer definierten Position angeordnet werden können. Eine Möglichkeit solcher Referenziermittelpaarungen ist eine Ausführung wie bei Steckbausteinen, also mindestens eine, bevorzugt zwei oder mehr Gruppen von einer, zwei, drei, vier oder mehr Noppen und komplementär dazu wenigstens eine Vertiefung, in die jeweils eine Gruppe von Noppen eingesteckt werden kann. Wie bei Steckbausteinen kann es dabei genügen, dass die Vertiefungen jeweils nur den Umfang der Gruppe exakt nachbilden, also Linienkontakte zu den äussersten Noppen beim Zusammenstellen ausbilden, nicht jedoch für jede einzelne Noppe eine passende Vertiefung aufweisen. Dadurch wird das Zusammenfügen der Formteile erleichtert.

Verallgemeinert gemäss einem ersten Aspekt weisen das oberste Formteil (Konter oder "erste" Formplatte) und das unterste Formteil (Rohling) korrespondierende Referenziermittel auf, wobei die Korrespondenz entweder direkt oder indirekt über eine oder mehrere, zwischen Rohling und erster Formplatte angeordnete "zweite" Formplatten erfolgt, so dass insgesamt die Position der ersten Formplatte relativ zum Rohling durch die Referenziermittel gegeben ist wie auch diejenige der optional dazwischen angeordneten zweiten Formplatten.

In den aneinander anliegenden Oberflächen der Formteile (Formplatten, Rohling) sind jeweils in einem oder beiden Formteilen Vertiefungen ausgebildet, die pro Oberflächenpaar eine Formkavität bilden. Nach Einfüllen und Verfestigen von Giessmaterial in die Kavitäten ergibt sich ein **Rohkörper** mit einer Sandwichstruktur aus Formteilen und Giessmaterial. Aus diesem wird der **Formkörper** in erster Linie durch Abtragen, z.B. Fräsen, herausgearbeitet. Im Bereich der Oberflächen des **Rohkörpers** ist es dabei nötig, dass überflüssiges Material, auch von Giessmaterial, vorhanden ist, um eine abtragende (subtraktive) Bearbeitung zu ermöglichen. Die Kavitäten, in die das Giessmaterial eingefüllt wird, weisen daher wenigstens für solche Bereiche ein Übermass aus, d.h. ihr Giessvolumen ist grösser als dasjenige des **Formkörpers,** der durch Abtragen von Material aus dem **Rohkörper** erhalten wird.

Aus einer anderen Perspektive umfasst der **Rohkörper,** aus dem ein **Formkörper** wie z.B. eine Prothese per Bearbeitung in einer Werkzeugmaschine gebildet wird, eine Anordnung von mindestens zwei Formteilen. Der Rohling ist ein solches Formteil, auf dem mindestens eine Formplatte als weiteres Formteil aufgelegt wird, um die Form zu bilden. An den aneinander anliegenden Flächen je zweier Formteile sind die genannten Referenziermittel ausgebildet, so dass aneinander anliegende Formteile relativ zueinander in einer vorgegebenen Position angebracht werden können. In je zwei aneinander anliegenden Oberflächen ist je eine Formkavität ausgebildet. Beide oder eine der beiden Oberflächen weisen mindestens eine Ausnehmung auf, die die Wand der jeweiligen Kavität bildet.

In einer Formplatte, bevorzugt der obersten, können vorgebildete Teile, z. B. Zähne, eingesetzt sein, wobei ein Teil in die Formkavität hineinragt. Dadurch sind diese Teile nach Füllen der Formkavität in dem Giessmaterial verankert.

Auf eine dritte Art kann auch definiert werden, dass die Form aus zwei Formteilen, nämlich dem Rohling und einer "ersten" Formplatte, besteht. Zur Ausbildung eines mehrschichtigen **Rohkörpers** wird die "erste" Formplatte in eine "reduzierte" erste Formplatte und mindestens eine "zweite" Formplatte aufgeteilt, die zwischen reduzierter erster Formplatte und Rohling angeordnet ist. Die Referenziermittel an der ursprünglichen "ersten" Formplatte, die der exakten relativen Positionierung der "ersten" Formplatte am Rohling dienen, befinden sich dann an derjenigen "zweiten" Formplatte, die am Rohling anliegt. Zwischen je zwei Formplatten und auch einer "zweiten" Formplatte und dem Rohling befindet sich eine Formkavität, die durch eine Ausnehmung in einer oder beiden der jeweils aneinander anliegenden Oberflächen gebildet wird.

Aus der vorangehenden Beschreibung beispielhafter Ausführungsformen des erfindungsgemässen Herstellungsverfahrens und daraus hergestellter Produkte sind dem Fachmann Ergänzungen und Abwandlungen zugänglich, ohne den Schutzbereich der Erfindung zu verlassen, der durch die Ansprüche definiert ist. Denkbar ist unter anderem:
- Anwendung des Herstellungsverfahrens für andere Werkstücke, insbesondere geschichtete Werkstücke wie zum Beispiel Skier;
- Herstellung von Werkstücken, in denen kontrolliert an definierten Stellen das Biege- oder Bruchverhalten modifiziert ist;
- Verwendung zur Herstellung von Werkstücken, die keine homogenen Eigenschaften aufweisen, wie zum Beispiel Verbundwerkstoff, und insbesondere an unterschiedlichen Positionen veränderte Eigenschaften aufweisen sollen bezüglich:
   ∘ physikalische oder chemische Kern- und/oder Oberflächeneigenschaften, Festigkeit, Biegeverhalten;
- Herstellung von Werkstücken, die Halte-, Stütz- und andere Verbindungselemente im Körper aufweisen müssen.
- Eine Kavität kann auch unterteilt sein, z. B. für zwei im wesentlichen getrennte Teile einer Prothese, die auf den rechten bzw. den linken Kiefer aufliegen.
- Zwei (oder auch mehr) Kavitäten können miteinander durch eine Formplatte hindurch verbunden sein, um eine durchgehende mit einem Material zu füllende Form zu bilden.
- Die Referenziermittel sind wenigstens teilweise durch Stifte, Bolzen o.ä realisiert, die in passende Bohrungen im jeweiligen Formteil eingesetzt sind. Dadurch wird vermieden, zum Ausbilden der hervorstehenden Teile grosse Mengen umgebendes Material des jeweiligen Formteils entfernen zu müssen.

## Patentansprüche

1. Verfahren zum Herstellen eines Formkörpers, insbesondere einer Zahnprothese (21), mit gestalteter Oberfläche (27; 47) und mit einer inneren Trennfläche (23; 70), wobei die gestaltete Oberfläche (27; 47) und die innere Trennfläche (23; 70) im Körper relativ zueinander auf vorgegebene Art angeordnet sind,
wobei
an einem Rohling (3) als einem untersten Teil einer Form für einen Rohkörper ein erster Teil einer Formkavität (41; 63) ausgebildet wird, wobei die innere Trennfläche (23; 70) Teil einer Wand der Formkavität ist, die Form erste (5) und zweite Referenziermittel (9) aufweist, die ersten Referenziermittel geeignet sind, die Form in einer Bearbeitungsmaschine in einer vorgegebenen Position der Trennfläche (23; 70) anzuordnen, und die zweiten Referenziermittel ausgebildet sind, mindestens eine erste Formplatte (31; 65) am Rohling in einer definierten relativen Position anzubringen, um die Form zu vervollständigen,
die erste Formplatte (31; 65) auf den Rohling aufgesetzt wird, wobei die erste Formplatte mit den zweiten Referenziermitteln korrespondierende, insbesondere dazu komplementär ausgebildete, dritte Referenziermittel (33) und einen zweiten Teil (37; 61) der Formkavität (41) aufweist,
die Formkavität mit Giessmaterial (43) gefüllt wird, um den Rohkörper umfassend Form und Giessmaterial auszubilden,
der Rohkörper in mindestens einer Bearbeitungsmaschine mittels der ersten Referenziermittel angeordnet wird, wobei durch die Referenziermittel sichergestellt ist, dass Bearbeitungsvorgänge im Koordinatensystem des Rohkörpers in das Koordinatensystem der Bearbeitungsmaschinen transformierbar sind, und durch Bearbeitungsvorgänge in der mindestens einen Bearbeitungsmaschine wenigstens Teile der Form und Giessmaterial entfernt werden, um im Wesentlichen die Oberfläche (27; 47) des Formkörpers, optional bis auf für die Bearbeitung nötige Stützelemente (49, 51) zum Rohkörper, auszubilden.

2. Verfahren gemäss Anspruch 1, **dadurch gekennzeichnet, dass** die Formkavität ein Giessvolumen grösser als der entsprechende Teil des Formkörpers bildet.

3. Verfahren gemäss einem der Ansprüche 1 bis 2, **dadurch gekennzeichnet, dass** Rohkörperbestandteile, insbesondere Kunstzähne (37), im zweiten Teil der Formkavität (41; 63) angebracht werden, wobei jeweils mindestens ein wirksamer Teil (38) der Rohkörperbestandteile aus der Formwand hervorsteht, um die Rohkörperbestandteile durch Einbetten des hervorstehenden Teils in das Giessmaterial (43) am Rohkörper (21) zu befestigen.

4. Verfahren gemäss einem der Ansprüche 1 bis 3, **dadurch gekennzeichnet, dass** vor dem Aufsetzen der ersten Formplatte (31; 59) mindestens ein Teil eines Einbettungsglieds, insbesondere ein Metallgestell (19), auf eine erste Formwand (23) der Formkavität (41; 63) aufgelegt wird, um es in den Rohkörper (21) einbetten zu können.

5. Verfahren gemäss einem der Ansprüche 1 bis 4, **dadurch gekennzeichnet, dass** wenigstens eines der Teile, die eine Wand der Formkavität (41; 63) bilden, bevorzugt wenigstens des Rohlings (3), weiter bevorzugt des Rohlings (3) und wenigstens der ersten Formplatte (31; 59), und insbesondere bevorzugt des Rohlings (3) und aller Formplatten (31; 59, 65), aus einem Material des Rohkörpers (21) bestehen, so dass diese Teile Bestandteile des Rohkörpers bilden können.

6. Verfahren gemäss einem der Ansprüche 1 bis 5, **dadurch gekennzeichnet, dass** mindestens eine zweite Formplatte (59) zwischen zwei Formteilen (3, 31, 65) ausgewählt aus
- erster Formplatte (31; 65),
- Rohling (3), und
- sofern vorhanden, einer oder zwei weiteren zweiten Formplatten (59) angeordnet wird, wobei die mindestens eine zweite Formplatte (59) mit jeweils anliegenden Formteilen je eine Formkavität (69) ausbildet und die mindestens eine zweite Formplatte sowie die anliegenden Formteile mit zueinander komplementären Referenziermitteln (9, 33), insbesondere Noppen und Vertiefungen, ausgestattet sind, so dass die mindestens eine zweite Formplatte zwischen den anliegenden Formteilen in vorgegebener relativer Position anbringbar ist.

7. Verfahren gemäss einem der Ansprüche 1 bis 6, **dadurch gekennzeichnet, dass** wenigstens eine, bevorzugt die Gesamtheit, der Oberflächen von Rohling (3) und Formplatten (31, 59), die Bestandteile der Wand von Formkavitäten bilden und nach Fertigstellung des Rohkörpers im Inneren des Rohkörpers (21) verbleiben, nicht eben ist, um eine Schichtung im Rohkörper mit unebenen Trennflächen zwischen den Schichten zu erhalten, bevorzugt für eine Anpassung an das Aussehen eines Vorbilds des Rohkörpers.

8. Ein geschichteter Rohkörper (1), aus welchem eine Zahnprothese (19, 21) herstellbar ist und welche nach dem Verfahren gemäss einem der Ansprüche 1 bis 7 vor der Durchführung der Bearbeitung in einer Bearbeitungsmaschine erhältlich ist, wobei der Rohkörper (1) aus aufeinanderliegenden Formteilen (3, 31; 3, 59, 31) besteht, wobei die Formteile folgende Teile umfassen:
- den Rohling (3) mit ersten Referenziermitteln (5), die geeignet sind, den Rohkörper in einer Bearbeitungsmaschine in einer vorgegebenen Position der inneren Trennfläche anzuordnen, und mit zweiten Referenziermitteln (9), bevorzugt in Form von Oberflächenstrukturen, die ein positionsgenaues Anbringen der ersten Formplatte (31) oder eventuell eines weiteren Formteils (59) am Rohling ermöglichen, wobei ein Metallgerüst (19) in der Formkavität auf den Rohling (3) aufgesetzt ist;
- als ein Formteil die erste Formplatte (31, 65), die das dem Rohling gegenüberliegende Ende des Rohkörpers bildet und mit dritten Referenziermitteln (33) ausgestattet ist, um sie positionsgenau an einem anliegenden Formteil anordnen zu können; und
- optional eine Anordnung umfassend wenigstens ein weiteres Formteil (59), das zwischen Rohling (3) und erster Formplatte (65) angeordnet ist, wobei im Falle von mindestens einem weiteren Formteil das weitere Formteil (59) mit weiteren Referenziermitteln (9, 33) an den Oberflächen, an denen die Formteile aneinander anliegen, ausgestattet sind, die ein positionsgenaues Anordnen der Formteile aneinander gestatten, und wobei die Anordnung mit zu den zweiten und dritten Referenziermitteln komplementären Referenziermitteln (9,33) ausgestattet ist, um sie positionsgenau zwischen Rohling und erster Formplatte anordnen zu können; und
wobei je mindestens zwei aufeinanderfolgende Formteile eine Formkavität (41; 63, 69) bilden und jede Trennfläche Teil jeweils der Formkavitätwand ist.

9. Geschichteter Rohkörper (1) gemäss Anspruch 8, **dadurch gekennzeichnet, dass** die ersten Referenziermittel (5) mindestens eines von einer Oberflächenstruktur und einer Markierung sind.

10. Geschichteter Rohkörper (1) gemäss einem der Ansprüche 8 bis 9, **dadurch gekennzeichnet, dass** die Oberflächenstrukturen (9, 33) Erhebungen, bevorzugt in Form von Noppen (9), und komplementär dazu ausgebildeten Vertiefungen (33) an zur Anlage aneinander ausgebildeten Oberflächen von Formteilen umfassen, um eine positionsgenaue Anlage durch Formschluss zu bewirken.

## Claims

1. Method for producing a molded body, in particular a dental prosthesis (21), having a shaped surface (27; 47) and having an inner separating surface (23; 70), wherein the shaped surface (27; 47) and the inner separating surface (23; 70) are arranged in the body relative to one another in a predetermined manner,
wherein
a first part of a mold cavity (41; 63) is formed on a blank (3) as a lowermost part of a mold for a raw body, wherein the inner separating surface (23; 70) is part of a wall of the mold cavity, the mold has first (5) and second referencing means (9), the first referencing means are suitable for arranging the mold in a processing machine in a predetermined position of the separating surface (23; 70), and the second referencing means are configured to attach at least one first mold plate (31; 65) to the blank in a defined relative position in order to complete the mold, the first mold plate (31; 65) is placed on the blank, wherein the first mold plate has third referencing means (33) which correspond, and more particularly are configured complementarily to the second referencing means, and a second part (37; 61) of the mold cavity (41),
the mold cavity is filled with casting material (43) in order to form the raw body comprising mold and casting material,
the raw body is arranged in at least one processing machine by means of the first referencing means, wherein it is ensured by the referencing means that machining operations in the coordinate system of the raw body can be transformed into the coordinate system of the processing machines, and at least parts of the mold and casting material are removed by machining operations in the at least one processing machine in order to form essentially the surface (27; 47) of the molded body, optionally with the exception of supporting elements (49, 51) necessary for the machining, to obtain the raw body.

2. Method according to claim 1, **characterized in that** the mold cavity forms a casting volume greater than the corresponding part of the molded body.

3. Method according to any one of claims 1 to 2, **characterized in that** raw body components, in particular artificial teeth (37), are attached in the second part of the mold cavity (41; 63), wherein in each case at least one effective part (38) of the raw body components projects out of the mold wall in order to fasten the raw body components to the raw body (21) by embedding the projecting part in the casting material (43).

4. Method according to any one of claims 1 to 3, **characterized in that**, before placing the first mold plate (31; 59), at least one part of an embedding member, in particular a metal framework (19), is placed on a first mold wall (23) of the mold cavity (41; 63) in order to be able to embed it in the raw body (21).

5. Method according to any one of claims 1 to 4, **characterized in that** at least one of the parts which form a wall of the mold cavity (41; 63), preferably at least of the blank (3), more preferably of the blank (3) and at least the first mold plate (31;59), and particularly preferably of the blank (3) and all mold plates (31; 59, 65), consist of a material of the raw body (21), so that these parts can form components of the raw body.

6. Method according to any one of claims 1 to 5, **characterized in that** at least one second mold plate (59) is arranged between two mold parts (3, 31, 65) selected from
- first mold plate (31; 65),
- blank (3), and
- if present, one or two further second mold plates (59), wherein the at least one second mold plate (59) forms in each case one mold cavity (69) with adjoining mold parts and the at least one second mold plate and the adjoining mold parts are provided with mutually complementary referencing means (9, 33), in particular knobs and depressions, with the result that the at least one second mold plate can be attached between the adjoining mold parts in a predetermined relative position.

7. Method according to any one of claims 1 to 6, **characterized in that** at least one, preferably all surfaces of the blank (3) and the mold plates (31, 59) which form components of the wall of mold cavities and remain in the interior of the raw body (21) after completion of the raw body is not planar in order to obtain a layering in the raw body with uneven separating surfaces between the layers, preferably for adaptation to the appearance of a model of the raw body.

8. Layered raw body (1), from which a dental prosthesis (19, 21) can be produced, and which can be obtained by means of the method according to any one of claims 1 to 7 before the machining is carried out in a processing machine, wherein the raw body (1) consists of mold parts (3, 31; 3, 59, 31) lying on top of each other, wherein the mold parts comprise the following parts:
- the blank (3) with first referencing means (5) which are suitable for arranging the raw body in a processing machine in a predetermined position of the inner separating surface, and with second referencing means (9), preferably in the form of surface structures, which allow the first mold plate (31) or possibly a further mold part to be attached precisely in position (59) to the blank, wherein a metal framework (19) is placed on the blank (3) in the mold cavity;
- as a mold part, the first mold plate (31, 65) which forms that end of the raw body which lies opposite the blank and is provided with third referencing means (33) in order to be able to arrange it precisely in position on an adjoining mold part; and
- optionally an arrangement comprising at least one further mold part (59) which is arranged between blank (3) and first mold plate (65), wherein, in the case of at least one further mold part, the further mold part (59) is provided with further referencing means (9, 33) on the surfaces on which the mold parts adjoin one another, which further referencing means allow the mold parts to be arranged precisely in position on one another, and wherein the arrangement is provided with referencing means (9, 33) which are complementary to the second and third referencing means in order to be able to arrange them precisely in position between blank and first mold plate; and
wherein in each case at least two successive mold parts form a mold cavity (41; 63, 69) and each separating surface is in each case part of the mold cavity wall.

9. Layered raw body (1) according to claim 8, **characterized in that** the first referencing means (5) are at least one of a surface structure and a marking.

10. Layered raw body (1) according to any one of claims 8 to 9, **characterized in that** the surface structures (9, 33) comprise elevations, preferably in the form of knobs (9), and depressions (33) formed in a complementary manner thereto on surfaces of mold parts which are formed to adjoin one another, in order to achieve a precisely positioned adjoining by positive locking.

## Revendications

1. Procédé de fabrication d'un corps moulé, en particulier d'une prothèse dentaire (21), avec une surface façonnée (27 ; 47) et avec une surface de séparation interne (23 ; 70), dans lequel la surface façonnée (27 ; 47) et la surface de séparation interne (23 ; 70) sont agencées dans le corps l'une par rapport à l'autre d'une manière prédéterminée,
dans lequel
une première partie d'une cavité de moule (41 ; 63) est formée sur une ébauche (3) en tant que partie la plus basse d'un moule pour un corps brut, dans lequel la surface de séparation interne (23 ; 70) fait partie d'une paroi de la cavité de moule, le moule présente des premiers (5) et des deuxièmes moyens de référencement (9), les premiers moyens de référencement sont appropriés pour agencer le moule dans une machine d'usinage dans une position prédéterminée de la surface de séparation (23 ; 70), et les deuxièmes moyens de référencement sont conçus pour appliquer au moins une première plaque de moule (31 ; 65) sur l'ébauche dans une position relative définie afin de compléter le moule,
la première plaque de moule (31 ; 65) est placée sur l'ébauche, dans lequel la première plaque de moule présente des troisièmes moyens de référencement (33) correspondant aux deuxièmes moyens de référencement, en particulier réalisés de manière complémentaire à ceux-ci, et une deuxième partie (37 ; 61) de la cavité de moule (41),
la cavité de moule est remplie de matériau de coulée (43) afin de former le corps brut comprenant le moule et le matériau de coulée,
le corps brut est agencé dans au moins une machine d'usinage au moyen des premiers moyens de référencement, dans lequel il est garanti par les moyens de référencement que des opérations d'usinage dans le système de coordonnées du corps brut peuvent être transformées dans le système de coordonnées des machines d'usinage, et au moins des parties du moule et du matériau de coulée sont enlevées par des opérations d'usinage dans l'au moins une machine d'usinage afin de former sensiblement la surface (27 ; 47) du corps moulé, en option jusqu'aux éléments de support (49, 51) nécessaires pour l'usinage par rapport au corps brut.

2. Procédé selon la revendication 1, **caractérisé en ce que** la cavité de moule forme un volume de coulée plus grand que la partie correspondante du corps moulé.

3. Procédé selon l'une quelconque des revendications 1 à 2, **caractérisé en ce que** des composants de corps brut, en particulier des dents artificielles (37), sont appliqués dans la deuxième partie de la cavité de moule (41 ; 63), dans lequel respectivement au moins une partie active (38) des composants de corps brut fait saillie de la paroi de moule afin de fixer les composants de corps brut sur le corps brut (21) par intégration de la partie faisant saillie dans le matériau de coulée (43).

4. Procédé selon l'une quelconque des revendications 1 à 3, **caractérisé en ce qu'**avant la mise en place de la première plaque de moule (31 ; 59), au moins une partie d'un organe d'intégration, en particulier un bâti métallique (19), est placée sur une première paroi de moule (23) de la cavité de moule (41 ; 63) afin de pouvoir l'intégrer dans le corps brut (21).

5. Procédé selon l'une quelconque des revendications 1 à 4, **caractérisé en ce qu'**au moins l'une des parties qui forment une paroi de la cavité de moule (41 ; 63), de préférence au moins de l'ébauche (3), de manière davantage préférée de l'ébauche (3) et au moins de la première plaque de moule (31 ; 59), et en particulier de préférence de l'ébauche (3) et de toutes les plaques de moule (31 ; 59, 65), sont constituées d'un matériau du corps brut (21) de sorte que ces parties peuvent former des composants du corps brut.

6. Procédé selon l'une quelconque des revendications 1 à 5, **caractérisé en ce qu'**au moins une deuxième plaque de moule (59) entre deux parties de moule (3, 31, 65) est choisie parmi
- une première plaque de moule (31 ; 65),
- une ébauche (3), et
- dans la mesure où elle est présente, une ou deux autres deuxièmes plaques de moule (59) sont agencées, dans lequel l'au moins une deuxième plaque de moule (59) avec des parties de moule respectivement adjacentes forme respectivement une cavité de moule (69) et l'au moins une deuxième plaque de moule ainsi que les parties de moule adjacentes sont équipées de moyens de référencement complémentaires les uns aux autres (9, 33), en particulier de boutons et de creux, de sorte que l'au moins une deuxième plaque de moule peut être placée entre les parties de moule adjacentes dans une position relative prédéterminée.

7. Procédé selon l'une quelconque des revendications 1 à 6, **caractérisé en ce qu'**au moins l'une, de préférence la totalité, des surfaces de l'ébauche (3) et des plaques de moule (31, 59), qui forment des composants de la paroi de cavités de moule et restent à l'intérieur du corps brut (21) après la finition du corps brut, n'est pas plane afin d'obtenir une stratification dans le corps brut avec des surfaces de séparation inégales entre les couches, de préférence pour une adaptation à l'aspect d'un modèle du corps brut.

8. Corps brut stratifié (1), à partir duquel une prothèse dentaire (19, 21) peut être fabriquée et qui peut être obtenue selon le procédé selon l'une quelconque des revendications 1 à 7 avant la réalisation de l'usinage dans une machine d'usinage, dans lequel le corps brut (1) est constitué de parties de moule superposées (3, 31; 3, 59, 31), dans lequel les parties de moule comprennent les parties suivantes :
- l'ébauche (3) avec des premiers moyens de référencement (5), qui sont appropriés pour agencer le corps brut dans une machine d'usinage dans une position prédéterminée de la surface de séparation interne, et avec des deuxièmes moyens de référencement (9), de préférence sous la forme de structures de surface, qui permettent une application en position précise de la première plaque de moule (31) ou éventuellement d'une autre partie de moule (59) sur l'ébauche, dans lequel une ossature métallique (19) est placée dans la cavité de moule sur l'ébauche (3) ;
- en tant que partie de moule, la première plaque de moule (31, 65), qui forme l'extrémité du corps brut opposée à l'ébauche et est équipée de troisièmes moyens de référencement (33) afin de pouvoir les agencer en position précise sur une partie de moule adjacente ; et
- en option, un agencement comprenant au moins une autre partie de moule (59), qui est agencée entre l'ébauche (3) et la première plaque de moule (65), dans lequel dans le cas d'au moins une autre partie de moule, l'autre partie de moule (59) est équipée d'autres moyens de référencement (9, 33) sur les surfaces sur lesquelles les parties de moule sont adjacentes les unes aux autres, qui permettent un agencement en position précise des parties de moule les unes contre les autres, et dans lequel l'agencement est équipé de moyens de référencement complémentaires aux deuxièmes et troisièmes moyens de référencement (9, 33) afin de pouvoir les agencer en position précise entre l'ébauche et la première plaque de moule ; et
dans lequel chaque fois au moins deux parties de moule successives forment une cavité de moule (41 ; 63, 69) et chaque surface de séparation fait partie respectivement de la paroi de cavité de moule.

9. Corps brut stratifié (1) selon la revendication 8, **caractérisé en ce que** les premiers moyens de référencement (5) sont au moins l'une parmi une structure de surface et un marquage.

10. Corps brut stratifié (1) selon l'une quelconque des revendications 8 à 9, **caractérisé en ce que** les structures de surface (9, 33) comprennent des saillies, de préférence sous la forme de boutons (9), et des creux (33) réalisés de manière complémentaire à celles-ci sur des surfaces de parties de moule réalisées pour être adjacentes les unes aux autres, afin de provoquer une application en position précise par engagement par correspondance géométrique.
